# EUROPEAN PATENT APPLICATION

(11) **EP 0 669 478 A1**
(43) Date of publication of application: **30.08.1995**
(21) Application number: 94309446.6
(22) Date of filing: 16.12.1994
(51) Int. Cl.: F16D 3/84, F16J 3/04

(54) **Protective bellows**

(30) Priority: 24.02.1994 GB 9403584
(71) Applicant: DRAFTEX INDUSTRIES LIMITED, Edinburgh EH3 6YY, Scotland (GB)
(72) Inventor: Leguay, Marc, F-44620 Malville (FR); Squelard, Patrick, F-44300 Nantes (FR)
(74) Representative: Foster, David Martyn

(57) **Abstract**

5 A protective bellows has an end collar (10) for securing the corresponding end of the bellows to the outside of a casing (12) such as the casing of a steering mechanism having an axially movable output rod (16). The collar (10) incorporates a conically shaped surface (28) which is sized to engage the end face (24) of the casing (12) and facilitates mounting thereon of the collar. A longitudinal force is applied to the bellows until a circumferentially extending trough (30) between the inclined surface (28) and the first bellows turn (5A) becomes resiliently located within a groove (20) in the casing (12). The push-on force for assembling the bellows is thus substantially less than the pull-off force.

## Description

The invention relates to a protective bellows incorporating fixing means at a first one of its ends for securing it to and around mounting means, in which the fixing means comprises an integral collar at the said first end of the bellows which is fitted onto the mounting means by moving the collar axially towards the mounting means and over a leading circumferentially extending mounting surface thereof.

Such a bellows is known from (for example) US-A-5 051 105. In this case, the fixing collar is placed over the mounting surface and fixed in position with a circumferentially extending clamp. This fixing process is time-consuming and the invention aims to address this problem.

In accordance with the invention, therefore, the known form of bellows is characterised in that the collar is shaped to provide a region having an internal surface which inclines away from the axis of the bellows towards the first end thereof, a first circumferentially extending part of the said inclined surface having a diameter greater than the diameter of the mounting surface and a second circumferentially extending part of the inclined surface closer to the axis of the bellows than the first path of that surface having a lesser diameter than the diameter of the mounting surface, and means adjacent the inboard edge of the inclined surface providing a resilient locking formation for engaging a corresponding formation adjacent the mounting surface for securing the collar thereto.

Protective bellows embodying the invention will now be described, by way of example only, with reference to the accompanying diagrammatic drawings in which:
Figure 1 is a side elevation, partly in cross- section, illustrating one form of the bellows in general terms;
Figure 2 is a scrap view of part of the bellows of Figure 1 to an enlarged scale and showing it being fitted into position on the casing of a steering mechanism;
Figure 3 corresponds to Figure 2 but shows the fitting process at a later stage;
Figure 4 corresponds to Figures 2 and 3 but shows the fitting at a final stage; and
Figures 5 and 6 are scrap views corresponding to Figures 2 to 4 but showing two variants in greater detail.

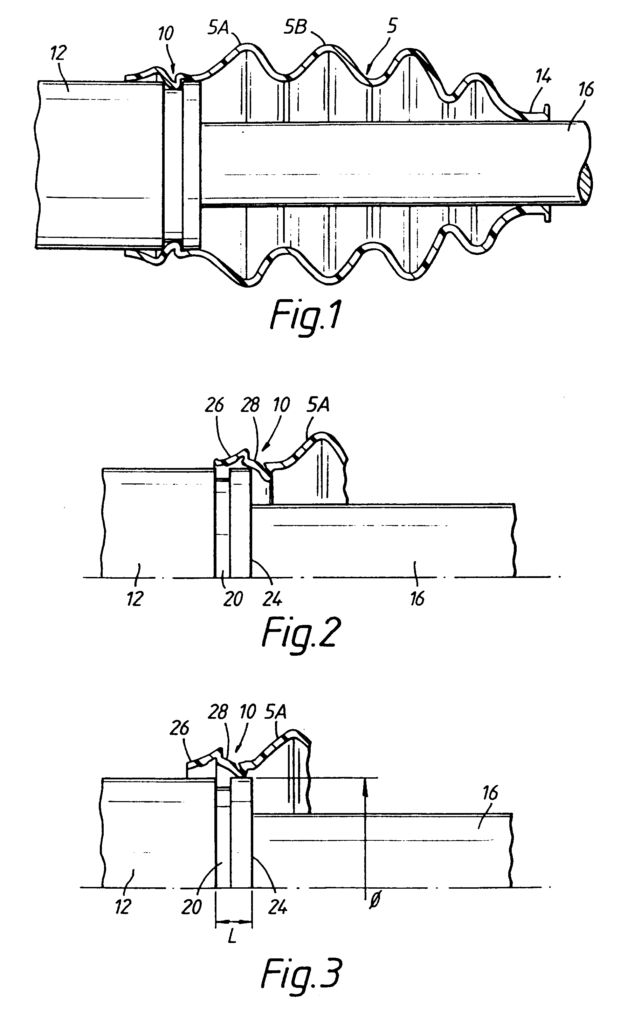

Figure 1 is a general side view of one form of the protective bellows 5. The bellows is advantageously made of thermoplastic material, such as EPDM/polypropylene for example, and produced by blow moulding. In this example, it is intended to protect the steering mechanism of a motor vehicle. As indicated, the bellows comprises a plurality of bellows turns 5A,5B etc., extending between a fixing collar 10 which is secured to a casing 12 of the steering mechanism and a fixing collar 14 which is secured to the steering rod 16. The longitudinal or axial position of the rod 16 is adjusted by the mechanical or hydraulic mechanism within the casing 12, and transmits its movement to one of the front wheels of the vehicle. A similar rod projects from the other end of the mechanism 12 and is similarly adjusted, and, in turn, adjusts the position of the other front road wheel. A similar bellows is fitted at that end of the casing.

The fixing collar 10 will now be described in more detail, with reference to Figures 2,3 and 4. The fixing collar 14 may be of the same or different construction. Figure 1 illustrates the fixing collar 14 only generally.

The purpose of the fixing collar 10 (and similarly for the fixing collar 14) is to attach the respective end of the bellows firmly in position so that it will not become detached in use and will maintain an effective seal for the life of the bellows. It is therefore necessary that the fixing collar 10 should retain its respective end of the bellows very firmly in position. However, it is also important that the fixing collar can be easily fitted in position, and secured, during initial assembly. A fixing collar which secures the bellows very firmly in position but which requires a complicated or time-consuming fitting operation is not satisfactory.

As shown in Figure 2, the casing 12 has a groove 20 adjacent its end 24 through which the rod 16 protrudes. The fixing collar 12 comprises a circumferentially extending flexible lip 26 which is substantially cylindrical in shape and integrally connects to a region 28 which has an internal generally conically shaped face. The regions 26 and 28 of the collar 10 are connected to the first turn 5A of the bellows 5 by a trough 30 which forms a circumferentially extending ridge around the inside surface of the bellows.

The internal diameter of the cylindrical lip 26 is greater than the external diameter of the casing 12, and so is the leading edge of the conical region 28. As shown in Figure 2, therefore, the end of the bellows can be easily fitted over the end face of the casing 12. The end face 24 of the casing then makes contact with the conical surface 28. The slope of this surface facilitates the fitting process, enabling the collar 10 to be pushed over the end of the casing 12 with only moderate force - as shown in Figure 3.

The applied force then continues until the circumferentially extending internal ridge provided by the trough 30 becomes located within the groove 20 in the casing 12. This ridge 30, together with the inherent resilience of the material of the bellows, holds the collar 10 securely in position on the casing 12. The configuration of the collar 10 is such that the "push-on" force (the force required to assemble the end of the bellows onto the casing 12) is very much less than the "pull-off" force (the force required to pull the collar off the casing 12).

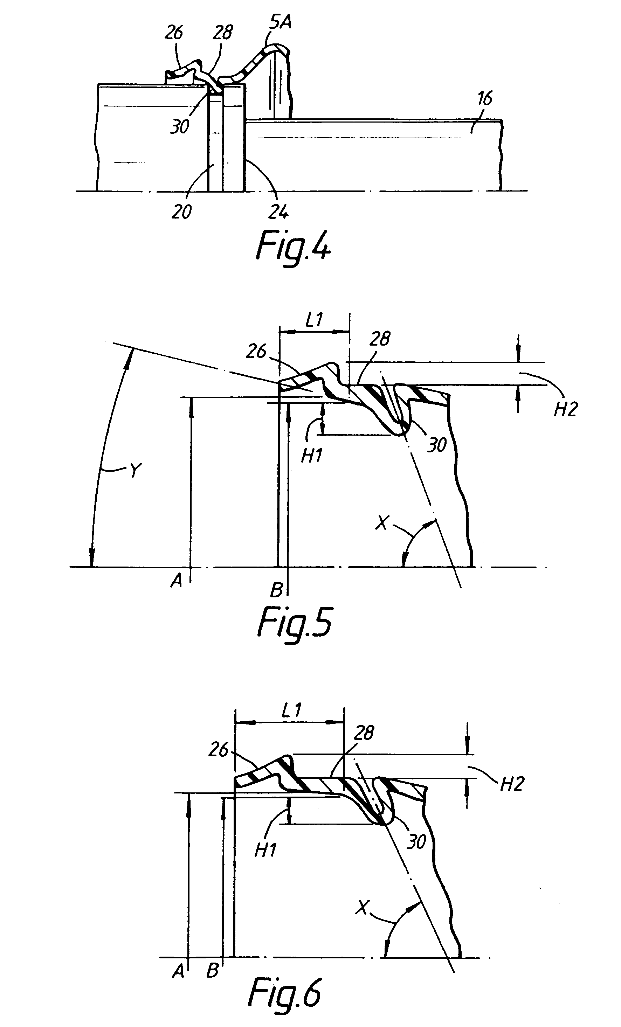

Figure 5 illustrates various dimensions and angles for the collar 10.

The dimension L1, which is the length from the distal end of the cylindrical lip 26 to the point on the conical surface 28 which first makes contact with the end face 24 of the casing 12 during assembly, is arranged to be greater than the dimension L indicated in Figure 3. This relationship facilitates guiding of the bellows onto the end of the casing 12. Diameter A as shown in Figure 5, which is the diameter at the leading edge of the conical surface 28, is arranged to be slightly greater than the diameter B, which is the diameter of the casing 12. This again facilitates assembly.

Figure 5 also illustrates two angles X and Y. Angle X is the angle of inclination of the ridge formed by the trough 30. It is found advantageous to arrange for angle X to lie between 60° and 80°. Angle Y is the angle of inclination of the initial part of the conical surface 28. It has been found advantageous for angle Y to lie between 15° and 30°.

Finally, Figure 5 illustrates two dimensions H1 and H2. H1 is the distance by which the ridge 30 projects inwardly from the point on the conical surface 28 which is initially contacted by the end face 24 of the casing. H2 is the maximum distance by which the outside of the lip 26 projects above the outside of the conical surface 28. It has been found advantageous for the value of H2 to lie between one third and two thirds of the value of H1.

Figure 6 shows a variant in which angle Y is zero. Otherwise, though, the preferred values discussed with reference to Figure 5 continue to apply.

## Claims

1. A protective bellows (5) incorporating fixing means (10) at a first one of its ends for securing it to and around mounting means (12), in which the fixing means comprises an integral collar (10) at the said first end of the bellows which is fitted onto the mounting means (12) by moving the collar (10) axially towards the mounting means (12) and over a leading circumferentially extending mounting surface (24) thereof, characterised in that the collar (10) is shaped to provide a region (28) having an internal surface which inclines away from the axis of the bellows towards the first end thereof, a first circumferentially extending part of the said inclined surface having a diameter greater than the diameter of the mounting surface (24) and a second circumferentially extending part of the inclined surface closer to the axis of the bellows than the first part of that surface having a lesser diameter than the diameter of the mounting surface (24), and means (30) adjacent the inboard edge of the inclined surface providing a resilient locking formation for engaging a corresponding formation (20) adjacent the mounting surface (24) for securing the collar (10) thereto.

2. A bellows according to claim 1, characterised in that the locking formation adjacent the inboard end of the inclined surface comprises a circumferentially extending trough (30) whose mouth faces outwardly of the bellows and which connects the inboard end of the inclined surface to the adjacent turn (5A) of the bellows and provides a ridge running around the inside of the bellows.

3. A bellows according to claim 2, characterised in that the said trough (30) is inclined to the diametral plane of the bellows by an angle between 60° and 80°.

4. A bellows according to claim 2 or 3, characterised in that the said corresponding formation adjacent the mounting means surfaces (24) comprises a circumferentially extending groove (20) therein for resiliently receiving the said trough (30).

5. A bellows according to any preceding claim, characterised in that the said first circumferentially extending part of the inclined surface is inclined to the axis of the bellows at an angle between 15° and 30°.

6. A bellows according to any preceding claim, characterised by a circumferentially extending flexible lip (26) integrally connected to the said first circumferentially extending part of the inclined surface of the collar (10) and projecting axially away from the bellows, the flexible lip (26) having a larger internal diameter than the mounting surface (24).
